# EUROPEAN PATENT SPECIFICATION

(11) **EP 3 242 830 B1**
(45) Date of publication and mention of the grant of the patent: **09.12.2020**
(21) Application number: 16734940.6
(22) Date of filing: 04.01.2016
(51) Int. Cl.: B62D 53/06

(54) **LIFTING TRANSPORTATION DEVICE COMBINATION**
HEBETRANSPORTVORRICHTUNGSKOMBINATION
COMBINAISON DE DISPOSITIF DE TRANSPORT ET DE LEVAGE

(30) Priority: 05.01.2015 FI 20155006
(43) Date of publication of application: 15.11.2017
(73) Proprietor: NT Liftec Oy, 33980 Pirkkala (FI)
(72) Inventor: KARPPELIN, Seppo, 35100 Orivesi (FI); KUUSISTO, Antero, 36240 Kangasala (FI); KUKKOLA, Hannu, 37560 Lempäälä (FI)
(74) Representative: Papula Oy
(86) International application number: PCT/FI2016/050001
(87) International publication number: WO 2016/110612

(56) References cited:
- EP-A1- 0 010 985
- EP-A1- 0 515 294
- EP-A1- 0 535 194
- GB-A- 1 450 337
- US-A- 2 894 764
- US-A- 3 894 645
- US-A- 4 164 297
- US-A- 4 513 987
- US-A- 5 040 815

## Description

The invention relates to a lifting transportation device combination according to the preamble of the independent claim directed thereto, the purpose of which is particularly handling of load to be carried out with load platforms, such as RoRo, terminal, industrial cassettes and/or the like.

In the type of load handling described above, it is on the one hand known to use load platforms provided with wheels, such as so called rolltrailers, and on the other hand load platforms to be used without wheels, such as so called cassettes.

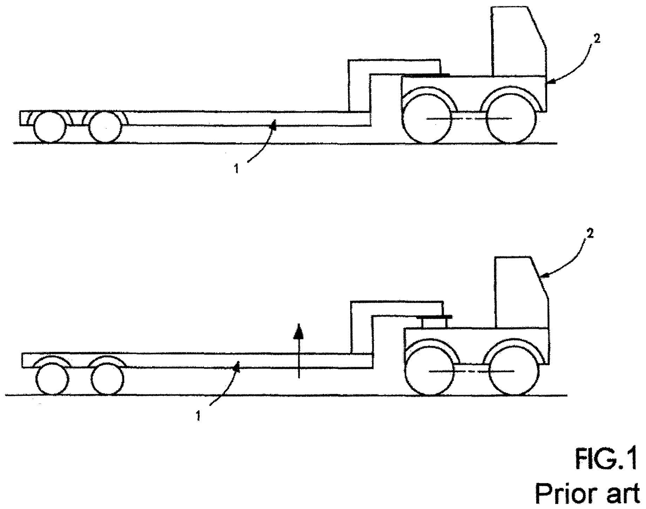

In the purpose described above e.g. in ports or in industrial environments it is nowadays known to use pulling devices equipped either with a built-in lifting transportation rear part, being steerable manually or automatically like so called AGV (Automatic Guided Vehicle) devices, or with pulling devices to be coupled with separate lifting transportation carriages by a so called fifth wheel arrangement. These kinds of lifting transportation devices have typically hydrostatically operated actuators for lifting and lowering of load existing on the lifting transportation rear part or carriage. The actuators, being typically used, comprise hydraulic actuator organs, being in connection with wheel assemblies of the lifting transportation rear part or carriage and/or in connection with a support surface that is movable in respect with a frame of a lifting transportation rear part for altering height of the support surface of the lifting transportation rear part or carriage. In figure 1 is shown a lifting transportation device combination being carried out on the one hand with a fifth wheel that is movable in height direction of a pulling device and on the other hand with arrangements altering height of the support surface by means of wheels of the lifting transportation carriage.

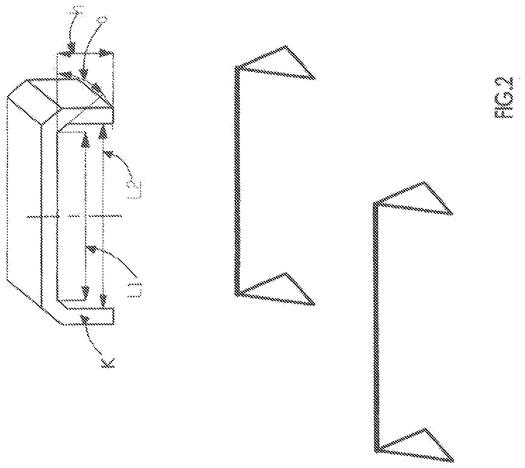

The load platforms being used customarily in this context have lower tunnels, in which the lifting transportation rear part or carriage can be driven when being lowered. The height of the tunnel in the load platform depends on the type of the cassette being used at any given time, whereby the tunnel height of cassettes being used particularly in maritime operations, is minimized. In figure 2 is shown a typical load platform (K), the dimensions of which vary depending on its operational purpose typically within the following limits:
- L1: 2133 mm - 2700 mm,
- L2: 2350 mm - 3000 mm,
- a: 50° - 60° and
- h: 703 mm - 1000 mm.

It is also possible to use as load platforms, instead of structures of so called cassette type being described above, also loose or stationary tresle assemblies of the type as shown in figure 2.

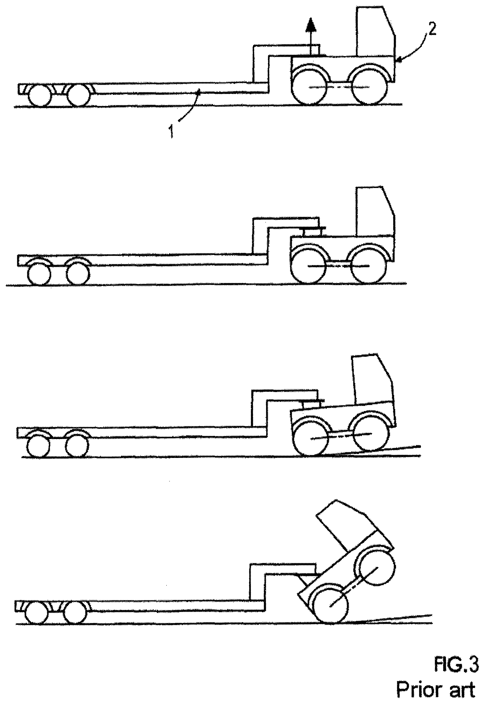

Particularly with pulling devices to be coupled with a separate lifting transportation carriage, nowadays a risk is always involved of a so called skipping of the pulling device, when a load is being transferred e.g. onto a ramp as shown in the series of pictures in figure 3. The skipping is due to the fifth wheel arrangement connecting the pulling device and the lifting transportation carriage, whereby the fifth wheel arrangement, when being lifted in the direction of height along upward movement thereof high torque is caused to the pulling device particularly due to rising of the pulling point.

A solution is previously known e.g. from patent FI 93187, in which a lifting transportation carriage comprises a drawbar provided with coupling means, the drawbar turning in vertical plane by means of a joint arrangement and being coupled and locked with counterpart organs of a fifth wheel. In this solution power transmission of a lifting function for altering height of a support surface of the lifting transportation carriage is arranged by an actuator arrangement driven by auxiliary power and being partly mechanical by turning the drawbar of the lifting transportation carriage by means of a joint arrangement, in which case together with the front end of the lifting transportation carriage simultaneously also height of the back end of the lifting transportation carriage increases by means of a wheel assembly through a joint mechanism adjusting height of the support surface.

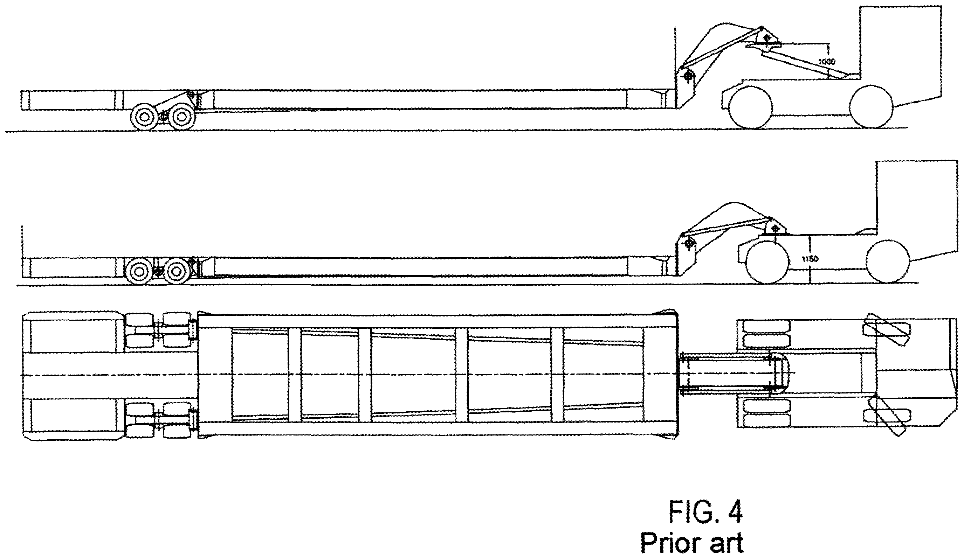

An implementation operating on the principle according to the above mentioned publication is shown in figure 4, which shows the rising of the pulling device's pulling point taking place in this type of solution, because increasing the ground clearance is based just to the height adjustment of the fifth wheel.

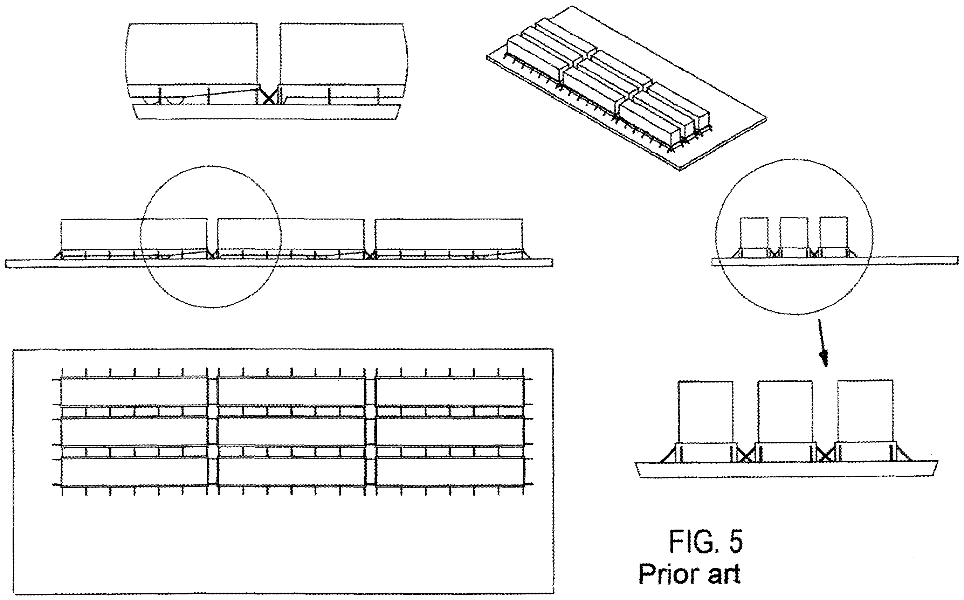

Furthermore from patent publication EP 0995669 a lifting transportation device combination is known that is meant in principle for rolltrailer or cassette use and which comprises a drawbar that is to be coupled separately with a rolltrailer or arranged in a built-in manner in a lifting transportation carriage. The drawbar is arranged turnable in essentially vertical plane by a joint arrangement and to be coupled with the pulling device on ball joint principle, such as by a towball. This solution is applicable particularly in handling of rolltrailers, because the rolltrailers along with the loads being collected thereon are being loaded e.g. in a cargo hold on the principle as shown in figure 5, by binding each rolltrailer separately onto the ground by a bracing wire. In this case, between the rolltrailers a free intermediate space is being left on each side due to the bracing wires.

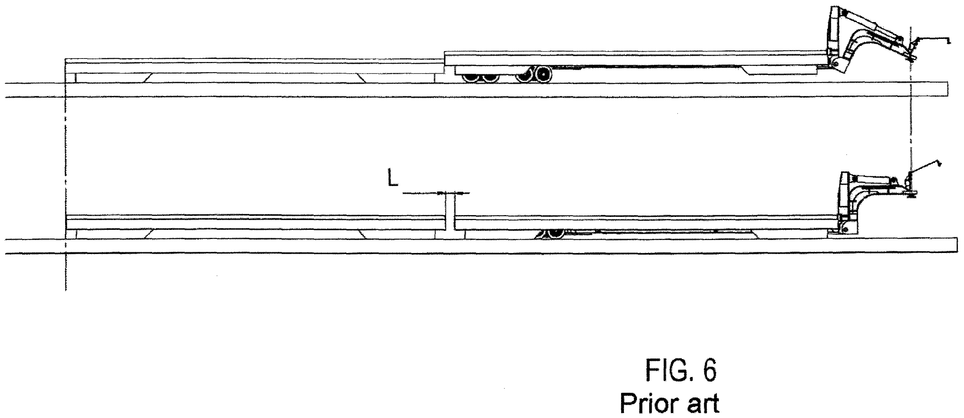

Use of the above solution in connection with cassette load platforms is, however, not profitable, because when lowering a cassette having a load thereon as shown in figure 6, the cassette moves towards the pulling device due to the operating mechanism being applied in the drawbar, which is why an unnecessary gap (L) will be left between the cassettes to be loaded. Because the cassettes do not have wheels, they can be, however, collected e.g. in a cargo hold in a totally tight manner against each other, which is why operating according to the above publication is thus not advantageous in connection with a cassette system. Furthermore, the solution in question is still based on height adjustment of the pulling device's fifth wheel, which is why the solution in question requires unnecessarily abundant and complicated (expensive) stock of equipment.

Furthermore from patent publications GB 1585241, US 3,239,238 and WO 2014/072042 it is previously known to utilize a pulling device and a transportation carriage to be coupled at the rear of the above, which carriage can be pushed backwards with respect to the pulling device when its front end is being lowered. However, not a single one of the above mentioned publications discloses a lifting transportation carriage that is meant particularly for handling of load platforms or applicable for the same, wherein an actuator arrangement therein makes possible lowering of a rear end of the lifting transportation carriage for pushing the same in a tunnel in a load platform or a cassette e.g. by altering a mutual distance between a support surface of the lifting transportation carriage and its frame or in a more customary manner by using a wheel arrangement at the rear end of the lifting transportation carriage that alters height of the lifting transportation carriage's frame from the ground. Furthermore, the solutions being presented in the above mentioned publications are structurally disproportionately complicated requiring in practice abundant service and maintenance, which is why they are disproportionately expensive to carry out and maintain.

Furthermore publications US 4,164,297 and US 3,894,645 disclose lifting transportation device combinations, in which the drawbar comprises:
- essentially at a center part thereof a joint part to be coupled at an articulation point with a joint of the joint arrangement,
- a first coupling arm that is directed downward from the joint part and that is to be coupled jointedly with first actuator means of the actuator arrangement altering height of the support surface at the front end of the lifting transportation carriage by turning the drawbar with respect to the articulation point, the first articulation means being articulated below the support surface of the lifting transportation carriage's frame and arranged to operate in longitudinal direction of the lifting transportation device combination,
- and a second coupling arm that is directed forward from the articulation point and that is provided with the coupling means.

It is an aim of the lifting transportation device combination according to the present invention to achieve a decisive improvement in the problems described above and thus to raise essentially the level of prior art. In order to carry out this aim, the lifting transportation device combination according to the invention is mainly characterized by what has been defined in the characterizing part of the independent claim directed thereto.

As the most important advantages of the lifting transportation device combination according to the invention may be mentioned simplicity and efficiency of the construction and use of the drawbar enabled by the same, in addition to which by virtue thereof work safety can be significantly improved e.g. in load handling in port or terminal operations etc. Thanks to the compact drawbar according to the invention, making possible implementation of the pulling device's frame as a further advantageous embodiment totally without a fifth wheel arrangement, being movable in the direction of height and requiring thus special service and maintenance, a significant improvement of safety is resulted first of all due to the fact that skipping risk of a pulling device can be efficiently minimized or, when keeping in mind usual elevation angles of the ramps, even totally eliminated. The above enables thus simplifying of the pulling device's stock of equipment by arranging only the power transmission for lifting function thereof by the actuator means of the actuator arrangement in connection with the lifting transportation carriage. Thanks to the invention it is furthermore possible to minimize the need for service of the actuator arrangement by placing the actuator means related thereto advantageously in lower structures and box housings of the bearing frame of the lifting transportation carriage. The invention makes thus possible for both of its manufacturing and service costs significantly more profitable entirety when compared to present solutions in a manner improving simultaneously efficiency and work safety of loading operations. By virtue of the height of the pulling device's pulling point getting minimized and the strain of the lifting transportation carriage being thus more even, also amount of the pulling device's axle damages decrease.

Other advantageous embodiments of the lifting transportation device combination according to the invention are presented in the dependent claims directed thereto.

In the following description, the invention is being illustrated in detail with reference to the appended drawings, in which:
- in figure 1: is shown an operating principle of a traditionally implemented lifting transportation carriage and pulling device combination in increasing height of its load space,
- in figure 2: is shown an exemplary cassette load platform meant for loading and a tresle assembly, being an alternative to the above,
- in figure 3: is shown a series of pictures with traditional technique implemented lifting transportation device that is rising onto a ramp,
- in figure 4: is shown as side views a drive position and a lowered position and as a view from above a lifting transportation device combination according to FI 93187,
- in figure 5: is shown with views as seen from different directions a loading operation being implemented on rolltrailer principle,
- in figure 6: is shown a side view of a loading operation taking place by a lifting transportation carriage that is implemented on the principle according to publication EP 0995669 when the support surface of the lifting transportation carriage is being lowered,
- in figure 7: is shown a side view of an advantageous lifting transportation device combination according to the invention when the lifting transportation carriage is in its drive position,
- in figures 8a and 8b: are shown as side views coupling of a lifting transportation carriage of an advantageous lifting transportation device combination according to the invention with a pulling device,
- in figures 9a and 9b: is shown a lowering situation of a lifting transportation carriage's support surface that is being carried out with a lifting transportation carriage of a lifting transportation device combination as shown in figure 7, and
- in figure 10: is shown with views as seen from different directions a loading operation being carried out with a lifting transportation device combination according to the invention.

The invention relates to a lifting transportation device combination, the purpose of which is handling of load Y that is carried out with load platforms K e.g. as shown in figure 2, such as RoRo, terminal, industrial cassettes and/or the like, and, which comprises a lifting transportation carriage 1 and a pulling device 2 that has at least power transmission means for power transmission of a drive function of the lifting transportation device combination and for a lifting function of the lifting transportation carriage in order to lift up and lower down the load on the load platform K, Y. The lifting transportation carriage 1 comprises a drawbar 6 provided with coupling means 5 in order to couple the same rotatably, such as on ball joint, crosslink principle or correspondingly, and in a lockable manner with a fifth wheel VP of the pulling device, wherein the drawbar 6 is arranged at a front end I of the lifting transportation carriage in an essentially vertical plane turnable w manner by a joint arrangement 7. The power transmission of the lifting function in order to alter height of the support surface 1k of the lifting transportation carriage is arranged by an actuator arrangement X driven by auxiliary power, such as being mechanically, electrically, pressure medium operated and/or like. The actuator arrangement altering the height of the support surface 1k of the lifting transportation carriage is arranged when the support surface 1k of the lifting transportation carriage is being lowered known as such to push the lifting transportation carriage backwards t from the pulling device 2 when viewed in longitudinal direction s of the lifting transportation device combination.

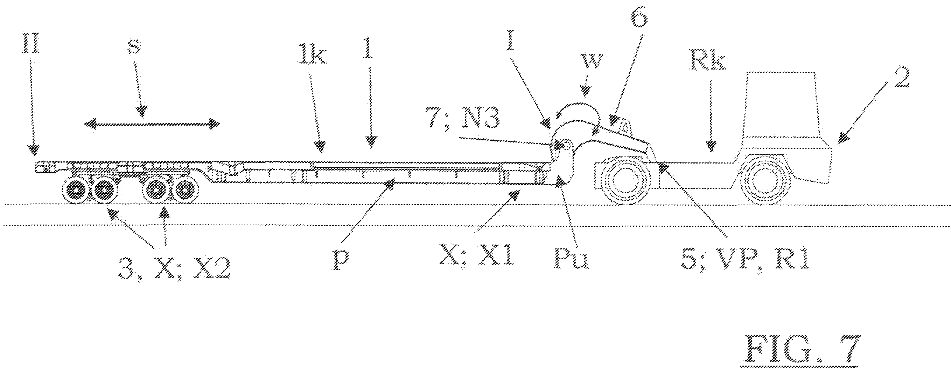

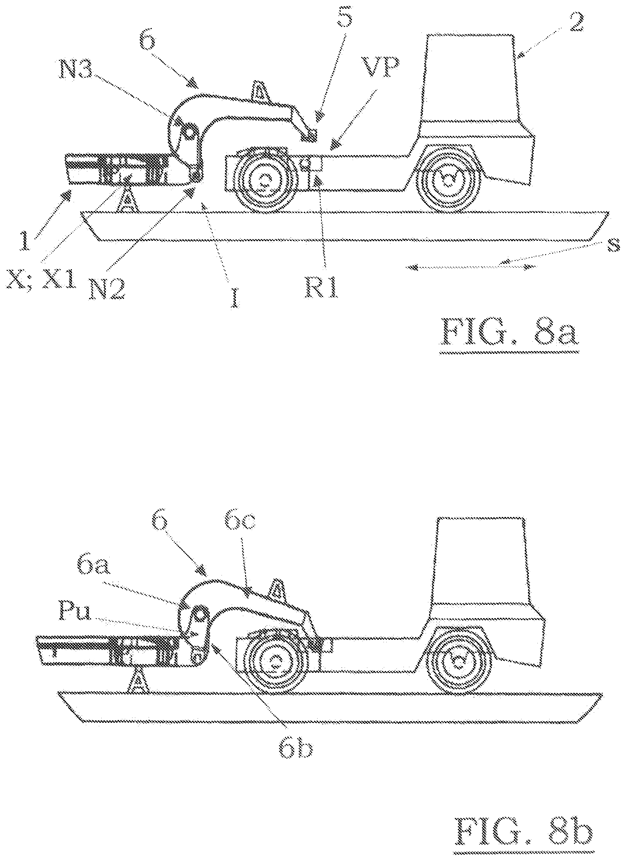

Particularly with reference to the embodiment shown in figures 7, 8a, 8b, 9a and 9b, the drawbar 6 comprises essentially at a center part thereof a joint part 6a to be coupled with a joint N3 of the joint arrangement 7, a first coupling arm 6b that is directed downward from the joint part 6a and that is to be coupled jointedly N2 with first actuator means X; X1 of the actuator arrangement altering height of the support surface at the front end I of the lifting transportation carriage, and a second coupling arm 6c that is directed forward from the articulation point and that is provided with coupling means 5.

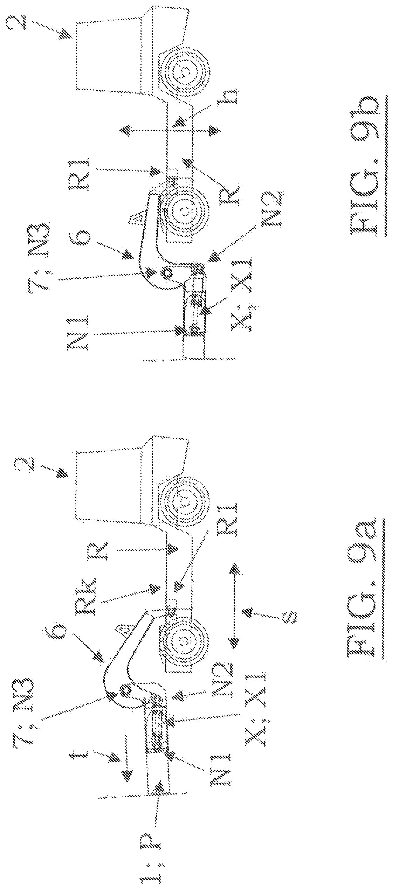

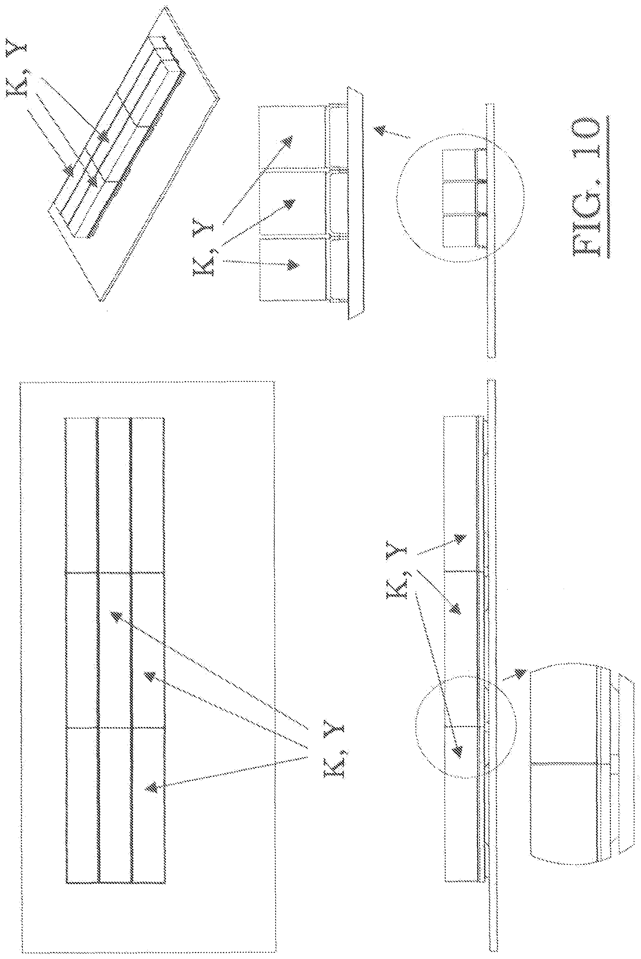

In this case the first actuator means X; X1 of the actuator arrangement are arranged when the support surface 1k of the lifting transportation carriage is being lowered to push the lifting transportation carriage on the principle as shown particularly in figures 9a and 9b backwards t from the pulling device 2 when viewed in the longitudinal direction s of the lifting transportation device combination in order to enable placing of the load platform essentially directly against a load on a corresponding load platform that exists behind the same, which enables filling of a load space e.g. on the principle manifesting itself e.g. in figure 10, without empty spaces between the cassettes.

As an advantageous embodiment of the lifting transportation device combination according to the invention, the actuator arrangement X comprises first actuator means X1 for altering height of the support surface of the front end I of the lifting transportation carriage by turning w the drawbar 6 with respect to the joint arrangement 7 and second actuator means X2 for altering height of the support surface of back end II of the lifting transportation carriage by changing a distance between the support surface 1k and frame P thereof and/or in or more customary way by altering height of the frame P by a wheel arrangement 3 at the back end II of the lifting transportation carriage.

As a further advantageous embodiment in this context, the joint arrangement 7 comprises a joint N3 existing in a protrusion part Pu that is directed essentially upward from a level that is defined by the bearing frame 1; P of the lifting transportation carriage.

As a furthermore advantageous embodiment of the lifting transportation device combination according to the invention, the first actuator means X; X1 of the actuator arrangement, such as one or more hydraulic cylinders or like, are articulated below the support surface Rk of the lifting transportation carriage's frame 1; P and arranged to operate in longitudinal direction s of the lifting transportation device combination.

As a furthermore advantageous embodiment of the lifting transportation device combination according to the invention, the first actuator means X; X1 are placed in a protected manner inside a box structure in connection with the bearing frame 1; P of the lifting transportation carriage.

As a furthermore advantageous embodiment of the lifting transportation device combination according to the invention, the fifth wheel 2; VP of the pulling device is arranged in a coupling part R1 that is immovable in direction of height h in the frame 2; R of the pulling device, which makes possible significant simplification of the pulling device's stock of equipment both from the point of view of manufacturing and service and maintenance in use thereof. As a further advantageous embodiment in this context, the coupling part R1 is placed essentially below the support surface Rk of the pulling device's frame 2; R particularly in order to lower the pulling point of the lifting transportation device combination with a view to rising onto or driving on a ramp. With the above arrangement, the pulling point of a loaded pulling device may be further lowered in a way that at its best the skipping risk thereof can even be eliminated.

As a furthermore advantageous embodiment of the lifting transportation device combination according to the invention, the coupling means 5 comprise a coupling arrangement for coupling the lifting transportation carriage removably with the pulling device 2.

It is clear that the invention is not limited to the embodiments shown or described above, but instead, it can be modified within the scope of the basic idea of the invention according to the operating purposes and embodiments at any given time within the limits defined by the enclosed claims. So, it is first of all clear that the lifting transportation device combination according to the invention can be exploited in environments concerning e.g. steel, paper or concrete industry for intermediate storing and further processing of products, whereby the lifting transportation devices being utilized can have e.g. a bigger or smaller amount of wheel assemblies than in the solutions presented in the appended drawings, because depending on the nature of the operation the load to be handled can typically vary from about 30 tons up to 250 tons. On the other hand, it is thus possible to carry out increment of the ground clearance of the lifting transportation rear part instead of the lifting mechanisms existing in connection with the wheel assemblies or in addition thereto by means of a lifting arrangement, being connected e.g. with the frame of the lifting transportation device, which moves a support surface on a lifting transportation rear part in height direction in relation to the frame.

A lifting transportation device combination according to the invention may naturally be carried out for the part of coupling between the lifting transportation carriage and the pulling device also with stationary arrangements in order to achieve a built-in lifting transportation device combination entirety. It is furthermore possible to carry out the coupling means of the drawbar with lockable ball or cross joint arrangements or with a fastening mechanism in order to couple the drawbar into a ball or cross joint arrangement being arranged in the fifth wheel. Furthermore a projection part coupling the drawbar with the lifting transportation carriage along with structures related thereto may also be coupled removably with the lifting transportation carriage. It is naturally also possible to utilize a customary pulling device provided with a fifth wheel with height adjustment.

structures related thereto may also be coupled removably with the lifting transportation carriage. It is naturally also possible to utilize a customary pulling device provided with a fifth wheel with height adjustment.

## Claims

1. Lifting transportation device combination, the purpose of which is handling of load (Y) that is carried out with load platforms (K), such as RoRo, terminal, industrial cassettes and/or the like, and, which comprises a lifting transportation carriage (1) and a pulling device (2) that has at least power transmission means for power transmission of a drive function of the lifting transportation device combination and for a lifting function of the lifting transportation carriage in order to lift up and lower down the load on the load platform (K, Y), wherein the lifting transportation carriage (1) comprises a drawbar (6) provided with coupling means (5) in order to couple the same rotatably, such as on ball joint, crosslink principle or correspondingly, and in a lockable manner with a fifth wheel (VP) of the pulling device, wherein the drawbar (6) is arranged at a front end (I) of the lifting transportation carriage in an essentially vertical plane turnable (w) manner by a joint arrangement (7), whereby the power transmission of the lifting function in order to alter height of the support surface (1k) of the lifting transportation carriage is arranged by an actuator arrangement (X) driven by auxiliary power, such as being mechanically, electrically, pressure medium operated and/or like, wherein the actuator arrangement altering the height of the support surface (1k) of the lifting transportation carriage is arranged when the support surface (1k) of the lifting transportation carriage is being lowered to push the lifting transportation carriage backwards (t) from the pulling device (2) when viewed in longitudinal direction (s) of the lifting transportation device combination, and wherein the drawbar (6) comprises essentially at a center part thereof a joint part (6a) to be coupled at an articulation point with a joint (N3) of the joint arrangement (7), a first coupling arm (6b) that is directed downward from the joint part (6a) and that is to be coupled jointedly (N2) with first actuator means (X; X1) of the actuator arrangement altering height of the support surface at the front end (I) of the lifting transportation carriage by turning (w) the drawbar (6) with respect to the articulation point, the first articulation means (X; X1) being articulated below the support surface (Rk) of the lifting transportation carriage's frame (1; P) and arranged to operate in longitudinal direction (s) of the lifting transportation device combination, and a second coupling arm (6c) that is directed forward from the articulation point and that is provided with the coupling means (5), **characterized in that**, the actuator arrangement (X) comprises second actuator means (X2) for altering height of the support surface of back end (II) of the lifting transportation carriage by changing a distance between the support surface (1k) and a frame (P) thereof and/or by altering height of the frame (P) by a wheel arrangement (3) at the back end (II) of the lifting transportation carriage.

2. Lifting transportation device combination according to claim 1, **characterized in that**, the first actuator means (X; X1) of the actuator arrangement comprise one or more hydraulic cylinders or like.

3. Lifting transportation device combination according to claim 1 or 2, **characterized in that**, the first actuator means (X; X1) are placed in a protected manner inside a box structure in connection with the bearing frame (1; P) of the lifting transportation carriage.

4. Lifting transportation device combination according to any of the preceding claims 1-3, wherein the fifth wheel (2; VP) of the pulling device is arranged in a coupling part (R1) that is immovable in direction of height (h) in the frame (2; R) of the pulling device, **characterized in that**, the coupling part (R1) is placed essentially below the support surface (Rk) of the pulling device's frame (2; R) particularly in order to lower a pulling point of the lifting transportation device combination with a view to rising onto or driving on a ramp.

5. Lifting transportation device combination according to any of the preceding claims 1-4, **characterized in that**, the coupling means (5) comprise a coupling arrangement for coupling the lifting transportation carriage removably with the pulling device (2).

## Patentansprüche

1. Hebetransportvorrichtungskombination, deren Zweck der Umschlag von Ladung (Y) ist, der mit Lastplattformen (K) wie zum Beispiel RoRo, Anlegebrücke, Industriekassetten und/oder dergleichen durchgeführt wird, und die aus einem Hebetransportfahrgestell (1) und einer Zugvorrichtung (2) besteht, die zumindest Kraftübertragungsmittel zur Kraftübertragung einer Antriebsfunktion der Hebetransportvorrichtungskombination und für eine Hebefunktion des Hebetransportfahrgestells aufweist, um die Ladung auf der Lastplattform (K, Y) anzuheben und abzusenken, wobei das Hebetransportfahrgestell (1) aus einer mit Kupplungseinrichtungen (5) versehenen Anhängekupplung (6) besteht, um diese drehbar wie über ein Kugelgelenk, Prinzip der Querverbindung oder entsprechend und verriegelbar mit einem fünften Rad (VP) der Zugvorrichtung zu kuppeln, wobei die Anhängekupplung (6) an einem vorderen Ende (I) des Hebetransportfahrgestells in einer im Wesentlichen vertikalen Ebene drehbar (w) durch eine Gelenkanordnung (7) angeordnet ist, womit die Kraftübertragung der Hebefunktion zur Änderung der Höhe der Auflagefläche (1k) des Hebetransportfahrgestells von einer durch Hilfsenergie angetriebenen Stellantriebsanordnung (X) durchgeführt wird, die zum Beispiel mechanisch, elektrisch, durch Druckmedium betrieben ist und/oder dergleichen, wobei die die Höhe der Auflagefläche (1k) des Hebetransportfahrgestells ändernde Stellantriebsanordnung eingerichtet wird, wenn die Auflagefläche (1k) des Hebetransportfahrgestells abgesenkt wird, um das Hebetransportfahrgestell von der Zugvorrichtung (2) nach hinten (t) bei Betrachtung in Längsrichtung (s) der Hebetransportvorrichtungskombination zu schieben, und wobei die Anhängekupplung (6) im Prinzip an einem mittleren Teil davon ein Gelenkteil (6a), das an einem Gelenkpunkt mit einem Gelenk (N3) der Gelenkanordnung (7) zu kuppeln ist, einen ersten Kupplungsarm (6b), der von dem Gelenkteil (6a) nach unten gerichtet ist und gelenkig (N2) zu kuppeln ist mit dem ersten Stellantriebsglied (X; X1) der die Höhe der Auflagefläche am vorderen Ende (I) des Hebetransportfahrgestells ändernden Stellantriebsanordnung, indem die Anhängekupplung (6) bezüglich des Gelenkpunktes gedreht (w) wird, die erste Gelenkeinrichtung (X; X1) unter der Auflagefläche (Rk) des Rahmens (1; P) des Hebetransportfahrgestells gelenkig angebracht und eingerichtet ist, um in Längsrichtung (s) der Hebetransportvorrichtungskombination zu wirken, und einen zweiten Kupplungsarm (6c), der vom Gelenkpunkt nach vorn gerichtet ist und mit der Kupplungseinrichtung (5) versehen ist, aufweist, **dadurch gekennzeichnet, dass** die Stellantriebsanordnung (X) aus einem zweiten Stellantriebsglied (X2) zur Änderung der Höhe der Auflagefläche des hinteren Endes (II) des Hebetransportfahrgestells besteht, indem ein Abstand zwischen der Auflagefläche (1k) und einem Rahmen (P) desselben geändert wird, und/oder indem die Höhe des Rahmens (P) durch eine Radanordnung (3) am hinteren Ende (II) des Hebetransportfahrgestells geändert wird.

2. Hebetransportvorrichtungskombination nach Anspruch 1, **dadurch gekennzeichnet, dass** das erste Stellantriebsglied (X; X1) der Stellantriebsanordnung aus einem oder mehreren Hydraulikzylindern oder ähnlich besteht.

3. Hebetransportvorrichtungskombination nach Anspruch 1 oder 2, **dadurch gekennzeichnet, dass** das erste Stellantriebsglied (X; X1) geschützt im Innern eines Kastenaufbaus in Verbindung mit dem tragenden Rahmen (1; P) des Hebetransportfahrgestells untergebracht ist.

4. Hebetransportvorrichtungskombination nach einem der vorhergehenden Ansprüche 1 bis 3, wobei das fünfte Rad (2; VP) der Zugvorrichtung in einem Kupplungsteil (R1) angeordnet ist, das unbeweglich in Höhenrichtung (h) im Rahmen (2; R) der Zugvorrichtung untergebracht ist, **dadurch gekennzeichnet, dass** das Kupplungsteil (R1) im Wesentlichen unter der Auflagefläche (Rk) des Rahmens (2; R) der Zugvorrichtung untergebracht ist, um insbesondere einen Zugpunkt der Hebetransportvorrichtungskombination in der Absicht tiefer zu legen, auf eine Rampe aufzufahren oder darauf zu fahren.

5. Hebetransportvorrichtungskombination nach einem der vorhergehenden Ansprüche 1 bis 4, **dadurch gekennzeichnet, dass** die Kupplungseinrichtung (5) aus einer Kupplungsanlage besteht, um das Hebetransportfahrgestell mit der Zugvorrichtung (2) lösbar zu kuppeln.

## Revendications

1. Combinaison de dispositif de transport et de levage, dont le but est la manipulation d'une charge (Y) qui est effectuée avec des plateformes de charge (K), telles que RoRo, un terminal, des cassettes industrielles et/ou similaires, et qui comprend un chariot de transport et de levage (1) et un dispositif de traction (2) qui a au moins des moyens de transmission de puissance pour la transmission de puissance d'une fonction d'entraînement de la combinaison de dispositif de transport et de levage et pour une fonction de levage du chariot de transport et de levage afin de lever et d'abaisser la charge sur la plateforme de charge (K, Y), dans laquelle le chariot de transport et de levage (1) comprend un timon (6) prévu avec des moyens de couplage (5) afin de coupler ce dernier en rotation, comme sur un joint à rotule, par principe de réticulation ou de manière correspondante, et d'une manière verrouillable avec une cinquième roue (VP) du dispositif de traction, dans laquelle le timon (6) est agencé au niveau d'une extrémité avant (I) du chariot de transport et de levage dans un plan essentiellement vertical, d'une manière rotative (w) par un agencement de joint (7), moyennant quoi la transmission de puissance de la fonction de levage afin de modifier la hauteur de la surface de support (1k) du chariot de transport et de levage est agencée par un agencement d'actionneur (X) entraîné par la puissance auxiliaire, tel qu'un milieu de pression actionné par voie mécanique, électrique et/ou similaire, dans laquelle l'agencement d'actionneur modifiant la hauteur de la surface de support (1k) du chariot de transport et de levage est agencé lorsque la surface de support (1k) du chariot de transport et de levage est abaissée pour pousser le chariot de transport et de levage vers l'arrière (t) à partir du dispositif de traction (2) lorsqu'il est observé dans la direction longitudinale (s) de la combinaison de dispositif de transport et de levage, et dans laquelle le timon (6) comprend essentiellement au niveau de sa partie centrale, une partie de joint (6a) à coupler au niveau d'un point d'articulation avec un joint (N3) de l'agencement de joint (7), un premier bras de couplage (6b) qui est dirigé vers le bas à partir de la partie de joint (6a) et qui doit être couplé, de manière articulée (N2), avec les premiers moyens d'actionneur (X ; X1) de l'agencement d'actionneur modifiant la hauteur de la surface de support au niveau de l'extrémité avant (I) du chariot de transport de levage en faisant tourner (w) le timon (6) par rapport au point d'articulation, les premiers moyens d'articulation (X ; X1) étant articulés au-dessous de la surface de support (Rk) du bâti (1 ; P) du chariot de transport et de levage et agencé pour fonctionner dans la direction longitudinale (s) de la combinaison de dispositif de transport et de levage, et un second bras de couplage (6c) qui est dirigé vers l'avant à partir du point d'articulation et qui est prévu avec les moyens de couplage (5), **caractérisé en ce que** l'agencement d'actionneur (X) comprend des seconds moyens d'actionneur (X2) pour modifier la hauteur de la surface de support de l'extrémité arrière (II) du chariot de transport et de levage en modifiant une distance entre la surface de support (1k) et son bâti (P) et/ou en modifiant la hauteur du bâti (P) par un agencement de roue (3) au niveau de l'extrémité arrière (II) du chariot de transport et de levage.

2. Combinaison de dispositif de transport et de levage selon la revendication 1, **caractérisée en ce que** les premiers moyens d'actionneur (X ; X1) de l'agencement d'actionneur comprennent un ou plusieurs cylindres hydrauliques ou similaires.

3. Combinaison de dispositif de transport et de levage selon la revendication 1 ou 2, **caractérisée en ce que** les premiers moyens d'actionneur (X ; X1) sont placés d'une manière protégée à l'intérieur d'une structure de boîte par rapport au bâti de support (1 ; P) du chariot de transport et de levage.

4. Combinaison de dispositif de transport et de levage selon l'une quelconque des revendications 1 à 3, dans laquelle la cinquième roue (2 ; VP) du dispositif de traction est agencée dans une partie de couplage (R1) qui est immobile dans la direction de la hauteur (h) dans le bâti (2 ; R) du dispositif de traction, **caractérisée en ce que** la partie de couplage (R1) est placée essentiellement au-dessous de la surface de support (Rk) du bâti (2 ; R) du dispositif de traction en particulier afin d'abaisser un point de traction de la combinaison de dispositif de transport et de levage avec une vue pour monter sur ou entraîner sur une rampe.

5. Combinaison de dispositif de transport et de levage selon l'une quelconque des revendications 1 à 4, **caractérisée en ce que** les moyens de couplage (5) comprennent un agencement de couplage pour coupler le chariot de transport et de levage de manière amovible avec le dispositif de transport (2).
